# DEMANDE DE BREVET EUROPEEN

(11) **EP 0 949 207 A1**
(43) Date de publication de la demande: **13.10.1999**
(21) Numéro de dépôt: 99420073.1
(22) Date de dépôt: 18.03.1999
(51) Int. Cl.: C02F 3/06, C02F 3/10

(54) **Procédé et installation pour le traitement d'eaux résiduaires comprenant des lits bactériens submergés**

(30) Priorité: 24.03.1998 FR 9803865
(71) Demandeur: Boccard, 69100 Villeurbanne (FR)
(72) Inventeur: Richard, Etienne, 65270 Saint Pe de Bigorre (FR); Jacquet, Xavier, 42120 Perreux (FR)
(74) Mandataire: Vuillermoz, Bruno

(57) **Abrégé**

Ce réacteur, notamment réacteur biologique, est destiné au traitement des effluents liquides, susceptible d'aboutir à la diminution de la demande chimique en oxygène (DCO), comprend au moins une source d'air (13) et des supports pour bactéries, susceptibles de digérer la matière organique contenue dans les effluents.

Les supports pour bactéries sont intégrés au sein d'une pluralité de cloisons (12) à parois perméables s'étendant sur toute la largeur du réacteur, lesdites cloisons étant espacées les unes des autres et alternativement décalées par rapport au fond dudit réacteur, de telle sorte à assurer un cheminement alternativement ascendant et descendant des effluents à traiter.

## Description

L'invention concerne un réacteur destiné à assurer le traitement d'effluents liquides, et tout particulièrement bien que non limitativement, les effluents liquides émanant d'une cave de vinification. Elle concerne également l'installation mettant en oeuvre un ou plusieurs de ces réacteurs ainsi que le procédé correspondant.

Ainsi que déjà précisé, l'objectif du procédé et du dispositif décrits ci-après réside dans le traitement des effluents notamment de vinification. Bien que toute la description qui va suivre, y compris de l'art antérieur correspondant, soit plus particulièrement réalisée en liaison avec cette application, il est bien entendu que l'invention ne saurait se limiter à celle-ci.

Dans le domaine d'activité de l'agro-alimentaire, qu'il s'agisse du domaine vinicole, mais également de celui du lait et des produits laitiers, ou encore celui de la préparation de jus de fruits, les nouvelles réglementations imposent dorénavant d'effectuer un traitement des effluents issus, soit des procédés de réalisation, soit résultant des phases de lavage et de nettoyage, et tout particulièrement les eaux de lavage des cuves, des filtres y compris des filtres avec les terres, telles que par exemple les terres de diatomée, mais également les eaux de lavage des sols, de la vendange, des camions, etc..., de telle sorte à permettre le rejet de ces effluents dans le milieu naturel. De manière générale, ces effluents ne sont pas très sales et on estime entre 80 et 90 % la quantité d'eau recyclable, à tout le moins en eau industrielle, c'est-à-dire susceptible de servir comme eau de lavage, et de manière plus générale, pour toutes les applications pour lesquelles la qualité potable de l'eau n'est pas impérative.

A ce jour, différentes alternatives ont été proposées pour régler ce problème des effluents. La première d'entre elles réside dans l'épandage desdits effluents. Elle nécessite des champs d'épandage de relativement grandes superficies, le plus souvent des jachères. Outre le fait que cette solution n'est plus compatible avec les réglementations en vigueur, elle nécessite de trouver des terrains de grandes superficies à proximité immédiates des installations concernées, afin de ne pas grever inutilement les coûts correspondants.

Une autre solution consiste à réaliser des stations d'épuration de facture traditionnelle. Cette solution se révèle relativement onéreuse, non seulement du fait de sa réalisation, mais surtout à l'entretien. Qui plus est, les adjuvants mis en oeuvre pour la filtration notamment, se retrouvent au fond des cuves et des bacs.

L'objectif de la présente invention réside également dans le souhait de rendre compatible l'eau issue du traitement avec les normes de rejet en DCO (Demande Chimique en Oxygène). Typiquement cette norme requiert que la DCO soit inférieure ou égale à 120 mg/l d'oxygène.

A cet effet, on a proposé afin de traiter ces effluents, des cuves de stockage desdits effluents, dans lesquelles on introduit des bactéries, et de manière plus générale des microorganismes épurateurs, adaptés à digérer la chimie carbonée, et on soumet le contenu de ces cuves à agitation et aération. Les délais de traitement sont relativement longs, puisqu'il convient de compter au moins une trentaine de jours pour aboutir à un résultat significatif. Qui plus est, ces cuves sont très encombrantes et la consommation en bactéries est relativement élevée. Enfin, la DCO obtenue est généralement insuffisante au regard de la norme, sauf à multiplier les bassins de traitement, et partant, à alourdir encore l'encombrement.

On a également proposé, par exemple dans le document FR-A-2 695 928, un procédé de traitement des effluents par bio-filtration selon la technologie dite « par lits fixés », c'est à dire dans laquelle la biomasse ou les microorganismes épurateurs, sont fixés sur des supports. Ce procédé met en oeuvre un réacteur, dans lequel les supports en question sont répartis de telle sorte à induire un cheminement en chicane des effluents à traiter au niveau desdits supports, la progression desdits effluents étant alternativement ascendante et descendante.

Si ce procédé permet d'augmenter significativement l'efficacité du traitement de bio épuration, on observe cependant une limite au niveau de la quantité d'effluents à traiter, se matérialisant par des durées de traitement, bien que réduites par rapport aux autres procédés plus traditionnels, néanmoins relativement importantes afin d'aboutir à des rejets conformes aux normes.

L'invention a pour objet un réacteur, notamment un réacteur biologique, destiné au traitement des effluents liquides, susceptible d'aboutir à la diminution de la DCO dans un délai relativement réduit et dans un encombrement limité.

Ce réacteur, pour assurer le traitement d'effluents liquides et notamment la diminution de la DCO, comprend au moins une source d'air et des supports pour microorganismes épurateurs, susceptibles de digérer la matière organique contenue dans les effluents, lesdits supports étant intégrés au sein d'une pluralité de cloisons espacées les unes des autres et alternativement décalées par rapport au fond dudit réacteur et s'étendant sur toute la largeur de celui-ci, de telle sorte à assurer un cheminement alternativement ascendant et descendant des effluents à traiter.

Il se caractérise en ce que les cloisons sont à parois perméables, et en ce que des rampes d'aération constituant les sources d'air sont ménagées entre deux cloisons consécutives, pour ainsi optimiser l'action des bactéries stockées dans les cloisons.

En d'autres termes, l'invention consiste à imposer aux effluents à traiter un cheminement forcé, respectivement ascendant et descendant le long de cloisons comportant des supports de microorganismes épurateurs, mais également autour de chacune de ces cloisons, tout en maintenant une saturation en oxygène, typiquement comprise entre 3 et 5 mg/l d'effluent, notamment au moyen de diffuseurs membranaires. De la sorte, on augmente la surface de contact entre les effluents et lesdits microorganismes, et en outre, on optimise la durée de ce contact, de par cette double circulation, respectivement ascendante et descendante et circulaire.

Ce cheminement forcé est avantageusement une conséquence du simple remplissage dudit réacteur, c'est-à-dire provenant de la pression engendrée par la masse de l'effluent liquide remplissant au fur et à mesure ledit réacteur.

Selon une caractéristique avantageuse de l'invention, les rampes d'aération ne sont mises en place que toutes les deux cloisons, afin de favoriser ce mouvement de circulation des effluents autour desdites cloisons.

Selon une autre caractéristique de l'invention, les cloisons sont amovibles, et insérables dans des logements prévus à cet effet au sein des parois latérales définissant le réacteur. On peut ainsi moduler à volonté l'intervalle entre deux cloisons consécutives en fonction du degré de concentration organique souhaité de l'élément à traiter.

L'invention concerne également l'installation mettant en oeuvre un tel réacteur. Cette installation pour le traitement et l'épuration biologique et chimique d'effluents liquides comprend :
- un bassin tampon, destiné à assurer une décantation préalable des effluents liquides à traiter ;
- un dégrilleur ou grille de filtration, destiné à assurer une pré-filtration desdits effluents, le dégrilleur étant placé en amont ou en aval par rapport au bassin tampon ;
- une pluralité de bio-réacteurs du type de celui précédemment décrit ;
- et un séparateur, destiné à assurer la décantation du liquide résultant du traitement au niveau des bio-réacteurs, afin de séparer le liquide des boues.

Selon une caractéristique de l'invention, le nombre de bio-réacteurs est d'au moins trois, montés en série, chacun des bio-réacteurs étant destiné à assurer une diminution de la Demande Chimique en Oxygène.

Enfin l'invention concerne également le procédé mis en oeuvre pour assurer le traitement des effluents liquides chargés en matière organique. Ce procédé consiste tout d'abord à effectuer la décantation partielle des effluents à traiter, puis à assurer une filtration, notamment des particules solides de plus grandes dimensions, et enfin, à leur faire subir un traitement de bio-réaction par la mise en oeuvre de microorganismes épurateurs fixés, aptes à digérer les chaînes carbonées et consistant à imposer aux effluents liquides à traiter cumulativement un cheminement alternativement ascendant et descendant et un cheminement circulaire par rapport aux supports de fixation desdits microorganismes, ce cheminement s'effectuant en milieu aéré, et notamment saturé en oxygène, et à soumettre lesdits effluents à au moins deux actions successives de bio-réaction de telle sorte à réduire la demande chimique en oxygène d'au moins 90 % par rapport à la charge entrante.

La manière dont l'invention peut être réalisée et les avantages qui en découlent ressortiront mieux de l'exemple de réalisation qui suit, donné à titre indicatif et non limitatif à l'appui des figures annexées.

La figure 1 est une représentation schématique en section longitudinale d'une installation conforme à l'invention plus spécifiquement dédiée au traitement des effluents liquides issus de caves de vinification, dont la figure 2 est une vue du dessus.

La figure 3 est une représentation schématique en section des détails des cloisons mises en oeuvre au niveau des bio réacteurs conformes à l'invention.

La figure 4 est une vue schématique de détail desdits réacteurs vus en plan.

La figure 5 est une représentation schématique en perspective d'une autre forme de réalisation de l'installation conforme à l'invention, dont la figure 6 est une vue schématique du dessus.

Ainsi que déjà précisé, l'invention va être plus particulièrement décrite en liaison avec les effluents liquides émanant des cuves de vinification. Il est bien entendu qu'elle ne saurait se limiter à cette seule application.

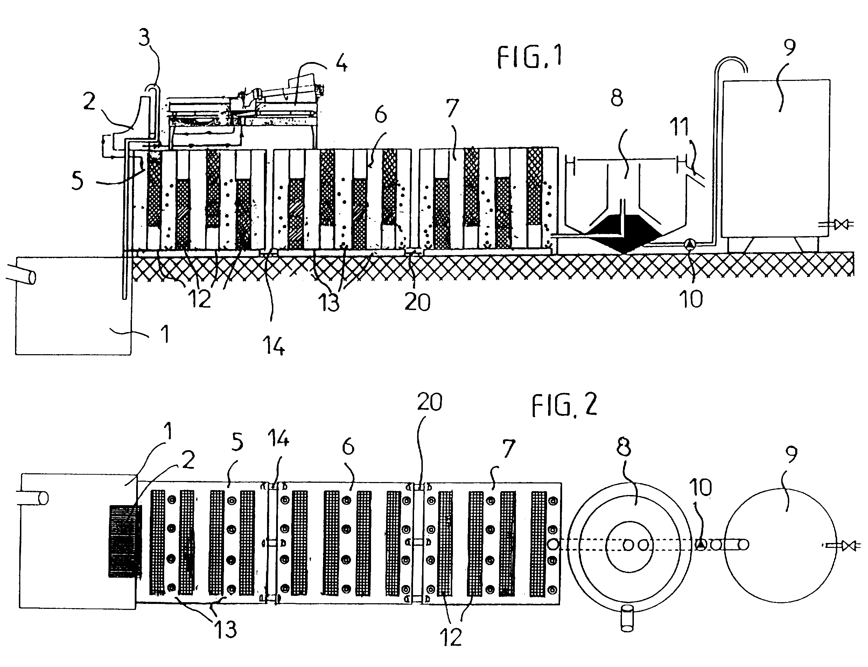

On a donc représenté sur la figure 1, une représentation schématique en section longitudinale d'une installation d'épuration biologique conforme à l'invention.

Les effluents à traiter peuvent provenir de différentes origines, et notamment liquide de lavage des cuves, des sols, des filtres, mais également des citernes, pressoirs, etc...

Ces effluents sont stockés dans un bassin tampon (1) de type en soi parfaitement connu. Ce bassin tampon est notamment destiné à permettre le stockage d'environ une journée de production des effluents. Parmi ses autres fonctions, on peut notamment citer celle de décantation partielle, permettant de la sorte d'éliminer les charges et matériaux les plus lourds contenus dans les effluents.

Les effluents liquides sont pompés par le biais d'une canalisation (3) au niveau d'un dégrilleur (2) assurant une pré-filtration au moyen d'un tamis relativement fin, dont les pores présentent une maille de 500 microns. Ce tamis est statique et avantageusement auto-nettoyant. Dans une autre version de l'invention, ce dégrilleur peut être placé en amont du bac tampon (1).

Les effluents ainsi préfiltrés sont alors acheminés vers un dispositif de flottation (4), dont la fonction essentielle est d'aboutir à une bonne séparation solide/liquide notamment par la mise en oeuvre de micro-bulles susceptibles d'agir comme élément moteur. Les graisses et matières en suspension mises en flottation à la surface du bassin sont alors évacuées par un système de bras racleur. Ce dispositif de flottation peut être de différente nature. Il peut être constitué d'un flottateur à air dissous, d'un type connu en soi, tel que par exemple commercialisé par la Société 2EIS sous la Marque Aeorofloat.

Dans un tel flottateur, les effluents sont introduits dans le centre du bassin de flotation simultanément avec de l'eau dépressurisée contenant des micro-bulles, un cône de diffusion permettant une dispersion des effluents saturés en air. Les graisses et les matières en suspension auxquelles se sont liées des micro-bulles restent à la surface du bassin. Les molécules d'eau, plus lourdes, redescendent dans le bassin et sont évacués en périphérie à travers un tuyau percé, de telle sorte à obtenir des vitesses minimales en sortie. Les matières flottées sont récupérées par un bras racleur de surface, qui les acheminent vers un déversoir, d'où elles tombent dans un bac de réception et d'évacuation. Ce bras racleur est avantageusement équipé d'un racle de fond qui collecte les sédiments, ces sédiments tombant dans un puits équipé d'une valve manuelle pour les évacuer vers le bac de réception des boues. Par ailleurs, le niveau d'eau dans le flottateur est régulé par déversoir manuel.

Il est connu que les performances du procédé de flottation par air dissous dépendent principalement du système adopté pour la dispersion et la dissolution de l'air. Ainsi, la dissolution optimale de l'air est obtenue par l'utilisation d'un hydroinjecteur.

Au moyen d'un tel dispositif, il est possible d'aboutir à un taux de saturation de 80 à 90 % d'air.

La mise en oeuvre d'un tel aéroflottateur permet ainsi d'écrêter la Demande Chimique en Oxygène, préalablement à l'action des microorganismes épurateurs.

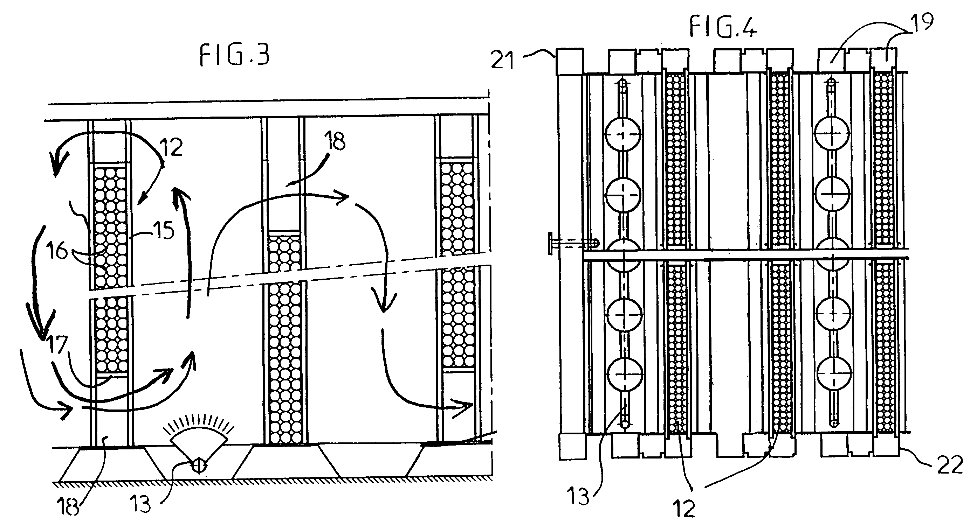

Le liquide évacué en périphérie du flottateur est alors acheminé vers un premier bio-réacteur (5) destiné à assurer la dégradation de 70 à 75 % de la charge entrante (DCO) dans l'installation de traitement. Il est typiquement composé d'une cuve en acier inoxydable dans laquelle sont installées des membranes d'aération (13) générant des micro-bulles, ainsi que des cloisons (12), comportant des supports biologiques sur lesquels sont fixés des bactéries susceptibles de digérer les chaînes carbonées. Selon une caractéristique de l'invention, ces cloisons (12) s'étendent sur toute la largeur de la cuve dudit réacteur. Selon une autre caractéristique essentielle de l'invention et que l'on peut mieux observer au niveau de la figure 3, ces cloisons sont décalées alternativement les unes par rapport aux autres, de telle sorte à induire un cheminement alternativement ascendant et descendant des effluents au contact desdites cloisons. En effet, lesdits effluents sont introduits en début de réacteur (5) issus du flottateur (4) par simple déversement continu, de sorte que la pression exercée par la masse des effluents entrant dans le réacteur induit la circulation du liquide au contact des cloisons (12) selon le cheminement précité.

En outre, selon une autre caractéristique de l'invention, les membranes d'aération (13) sont décalées par rapport aux cloisons (12), ainsi qu'on peut bien l'observer sur les figures 1 à 4. Plus précisément, lesdites rampes d'aération ne sont présentes entre deux cloisons consécutives que toutes les deux cloisons. Ainsi, dans la forme de réalisation représentée sur les figures 1 à 4, les rampes ne sont présentes qu'entre une cloison décalée vers le haut et une cloison en contact avec le fond, dans cet ordre par rapport au sens d'écoulement des effluents.

Ce faisant, outre l'aération à laquelle sont soumis les effluents de par la présence entre desdites rampes (13) munies de diffuseurs membranaires, alimentant le bio-réacteur en air, lesdits effluents sont en contact permanent avec les bactéries, bien que se déplaçant parallèlement à leurs supports, lesdites cloisons étant perméables pour justement permettre le contact effluents/bactéries. En outre, de par le décalage entre les rampes d'aération et les cloisons, l'air ou l'oxygène émis par les diffuseurs membranaires induit une circulation desdits effluents autour des cloisons décalées vers le haut, augmentant de la sorte la surface et surtout la durée de contact des effluents avec les bactéries, et partant, optimisant l'action de ces dernières.

Ces cloisons (12) sont mieux représentées sur la figure 3. Elles sont par exemple chacune constituées de deux grilles verticales (15) définissant un volume interne comblé par un support biologique de bactéries (16), par exemple constitué de zéolithe, de fibres de polyuréthanne ou de support cellulosique. Dans la représentation schématique de la figure 3, la première cloison (12) est surélevée par rapport au fond du réacteur ménageant un passage libre (18) pour permettre le cheminement des effluents selon la flèche représentée. La cloison adjacente prend appui directement au fond du réacteur, la quantité principale du liquide passant cette fois par dessus ladite cloison selon le cheminement qui lui est imposé. En outre, ces grilles (15) étant perméables, elles permettent un pénétration desdits effluents à l'intérieur des cloisons pour permettre l'action des bactéries.

Selon l'invention, le nombre de ces réacteurs est de trois (5, 6, 7). Le réacteur (5) est destiné à assurer la dégradation de 70 à 75 % de la charge entrante dans l'installation ainsi que déjà dit. A l'issue de celui-ci, les effluents sont acheminés au niveau du second réacteur (6) du type identique au précédent par le biais d'une canalisation (14), ce réacteur étant destiné à assurer la dégradation de 70 à 80 % de la charge restante après passage dans le bio-réacteur (5).

De la même manière, à l'issue de ce réacteur (6), les effluents sont acheminés vers le bio-réacteur (7) par le biais d'une canalisation (20). Ce bio-réacteur (7) assure la finition de la dégradation des charges organiques et fonctionne comme un réacteur du type « boues activées » (aération prolongée sur flore bactérienne). Il est de même structure et de composition que les deux réacteurs précédents.

A l'issue de ce réacteur, les effluents sont acheminés au niveau d'un clarificateur (8), typiquement constitué d'une cuve de décantation assurant la séparation liquide/solide. A ce niveau, les boues décantent au fond de ce clarificateur et sont acheminés par le biais d'une canalisation et d'une pompe (10) vers un réceptacle de stockage des boues (9).

La phase liquide s'évacue par trop plein par le biais d'une canalisation (11) afin soit, d'être réutilisé notamment à titre de liquide de lavage, ou de manière plus générale liquide industriel, soit d'être directement rejeté dans le milieu naturel, la DCO dudit liquide étant conforme à la réglementation.

On a représenté sur la figure 4 une vue en plan de l'un des bio-réacteurs. Comme on peut le voir, ses parois latérales (21, 22) définissent des logements (19), typiquement de section transversale carrée ou rectangulaire, destinés à recevoir les cloisons (12) dimensionnées de façon complémentaire, c'est à dire que l'épaisseur desdites cloisons correspond sensiblement à la longueur desdits logements, au jeu près. De fait, et ainsi qu'on peut l'observer, ces cloisons occupent l'intégralité de la largeur du réacteur. Ces cloisons (12) assurent de fait, outre la fonction de concentration des supports de bactéries, également une fonction de rigidification du réacteur par effet poutre, contribuant ainsi à renforcer ses propriétés mécaniques.

Dans l'exemple précédent, on a différencié les trois bio-réacteurs (5, 6, 7).

Dans une autre forme de réalisation conforme à l'invention, il peut n'exister physiquement qu'une seule cuve, dans laquelle on différencie trois compartiments distincts par l'insertion à intervalle régulier ou non de cloisons imperméables, de mêmes dimensions que les cloisons (12) rassemblant les supports de bactéries, mais qui vont délimiter alors les trois réacteurs effectifs destinés, comme déjà dit, à assurer la dégradation de la charge selon les fourchettes indiquées. Pour ce faire, il suffit de prévoir des cloisons imperméables de longueur et d'épaisseur identiques aux cloisons contenant les supports biologiques et les insérer au niveau des logements (19), telle que représentés dans la Figure (4). En revanche, ces cloisons imperméables s'étendent sur toute la hauteur dudit réacteur, et reposent au fond de celui-ci, afin d'assurer une réelle délimitation entre les trois réacteurs au regard des effluents à traiter.

De la sorte, on peut réaliser un réacteur modulaire, dont on peut en outre ajuster la durée de séjour dans chacun des compartiments ainsi définis en fonction de la charge.

Avec l'installation du type en question, on aboutit à une diminution importante de la durée de traitement des effluents puisque, par exemple, s'agissant des effluents issus de vinification, cette durée du traitement atteint trois jours au lieu des 10 à 15 jours voir plus habituellement nécessaires avec les installations connues à ce jour.

Par ailleurs, les effluents issus de ce traitement présentent une DCO conforme à la norme en vigueur, à savoir inférieure ou égale à120 mg/l d'oxygène.

Enfin, on observe une consommation quasiment nulle des bactéries compte tenu du développement optimum de ces dernières, qui est susceptible de s'opérer à l'intérieur des cloisons.

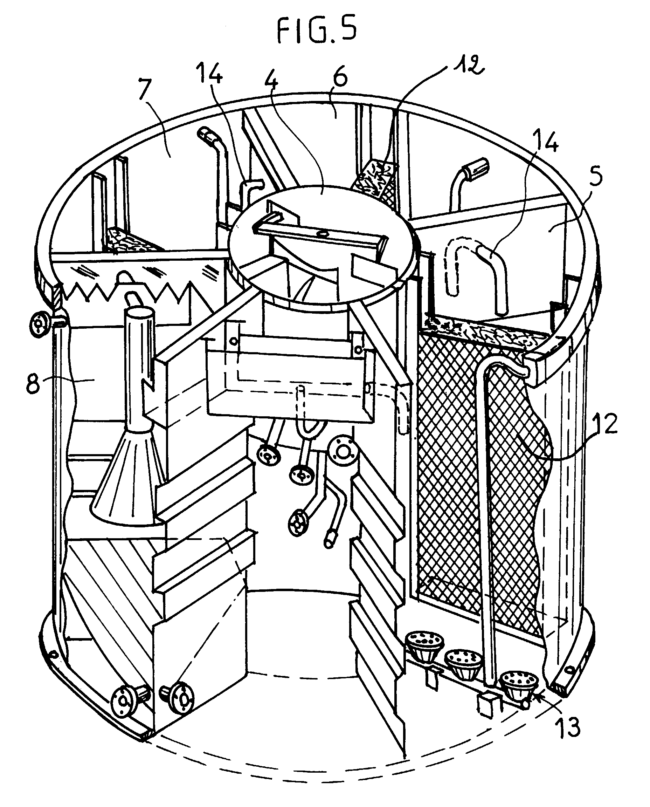

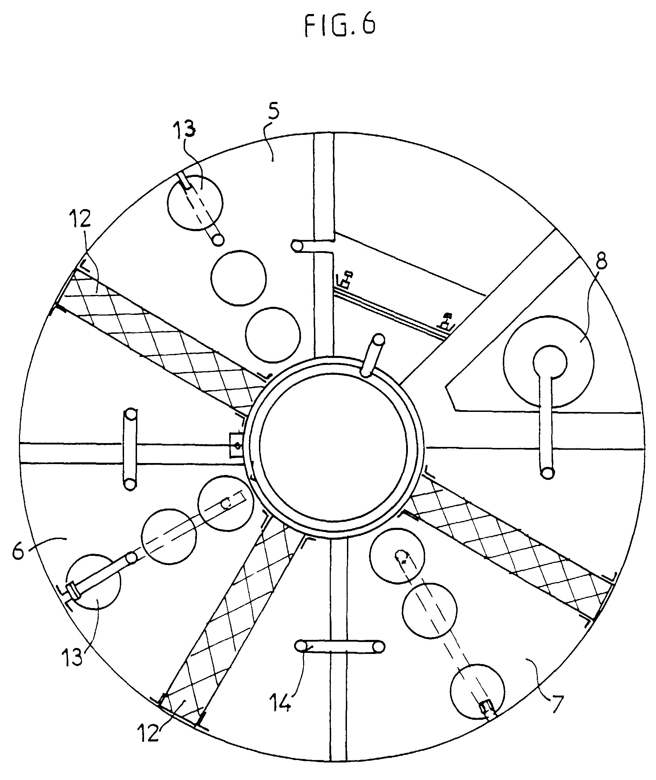

On a représenté en liaison avec les figures 5 et 6 une autre forme de réalisation de l'invention. Au sein de ces figures, des références identiques désignent les mêmes éléments que ceux des figures précédentes.

Dans cette forme de réalisation, l'intégralité de l'installation est circonscrite dans une enveloppe cylindrique ou quasi-cylindrique, les différents compartiments étant délimités au niveau de secteurs radiaux et d'un évidement central, qui dans l'exemple décrit, est un cylindre coaxial avec l'enveloppe de l'installation. Ce faisant, on aboutit à une très nette diminution de l'encombrement généré par ladite installation, ce qui permet son implantation au niveau de caves et autre lieux similaires existants.

Dans cet exemple, le cylindre central reçoit l'aéroflotatteur (4), dont on a représenté le bras de raclage supérieur. Après traitement au niveau de cet organe, les effluents se déversent par gravité dans un bac intermédiaire (23), se déversant à son tour dans le premier bio-réacteur (5), en forme de secteur radiale. Les différents bio-réacteurs (5 - 7) sont définis par des cloisons radiales (24), s'étendant depuis le cylindre centrale (4) jusqu'à la périphérie de l'enveloppe cylindrique. Les cloisons support (12) sont également radiales, et sont fixées de la même manière que dans la forme de réalisation précédente, avec le même principe de modularité. Ainsi, si pour une meilleure compréhension des dessins, une seule cloison support (12) a été représentée dans chacun des bio-réacteurs (5 - 7), il est bien entendu que chacun desdits bio-réacteurs est susceptibles d'en comporter plusieurs, afin d'assurer le cheminement en piston des effluents, et d'optimiser l'action des microorganismes épurateurs.

A l'issue du bio-réacteur (7), les effluents ainsi traités sont acheminés vers le bac de décantation (8), également en forme de secteur radial. On a représenté le cône de décantation (25), et par la référence (26) la canalisation d'acheminement des effluents traités, en provenance du dernier bio-réacteur (7).

Le principe de fonctionnement de cette forme de réalisation est bien entendu identique à celui de la forme de réalisation décrite en liaison avec les figures 1 à 4.

## Revendications

1. Réacteur, notamment réacteur biologique, destiné au traitement des effluents liquides, susceptible d'aboutir à la diminution de la demande chimique en oxygène (DCO), comprenant au moins une source d'air (13) et des supports pour microorganismes épurateurs, et notamment pour bactéries, susceptibles de digérer la matière organique contenue dans les effluents, lesdits supports étant intégrés au sein d'une pluralité de cloisons (12) espacées les unes des autres et alternativement décalées par rapport au fond dudit réacteur et s'étendant sur toute la largeur du réacteur, de telle sorte à assurer un cheminement alternativement ascendant et descendant des effluents à traiter, ***caractérisé*** en ce que les cloisons (12) sont à parois perméables, et en ce qu'entre deux cloisons consécutives (12) sont ménagées des rampes d'aération (13) constituant lesdites sources d'air, pour ainsi optimiser l'action des bactéries stockées dans les cloisons.

2. Réacteur selon la revendication 1, ***caractérisé*** en ce que les rampes d'aération (13) ne sont mises en place que toutes les deux cloisons - support (12), afin de favoriser la création d'un mouvement de circulation des effluents autour desdites cloisons.

3. Réacteur selon l'une des revendications 1 et 2, ***caractérisé*** en ce que les cloisons (12) sont amovibles, et insérables dans des logements (19) prévus à cet effet au sein des parois latérales (21, 22) définissant le réacteur.

4. Réacteur selon l'une des revendications 1 à 4, ***caractérisé*** en ce qu'il comporte en outre des cloisons imperméables aux effluents à traiter, de mêmes largeur et même épaisseur que les cloisons (12) de supports des microorganismes épurateurs, mais de hauteur correspondant à la hauteur dudit réacteur, et destinées à définir des compartiments distincts au sein dudit réacteur, pour différencier des phases de traitements elles-mêmes distinctes.

5. Installation pour le traitement et l'épuration biologique et chimique d'effluents liquides comprenant :
• un bassin tampon (1), destiné à assurer une décantation préalable des effluents liquides à traiter ;
• un dégrilleur ou grille de filtration (2), destiné à assurer une pré-filtration desdits effluents, le dégrilleur étant placé en amont ou en aval par rapport au bassin tampon ;
• un réacteur de traitement biologique desdits effluents, intégrant des microorganismes épurateurs, et notamment des bactéries destinées à digérer la matière organique contenue dans les effluents ;
• et un séparateur (8), destiné à assurer la décantation du liquide résultant du traitement au niveau dudit réacteur, afin de séparer le liquide des boues ;
***caractérisé*** en ce que le réacteur (5, 6, 7) comporte des supports pour lesdites bactéries intégrés au sein d'une pluralité de cloisons (12) à parois perméables s'étendant sur toutes la largeur du réacteur, lesdites cloisons étant espacées les unes des autres et alternativement décalées par rapport au fond dudit réacteur, de telle sorte à assurer un cheminement alternativement ascendant et descendant des effluents à traiter, et en ce qu'entre deux cloisons consécutives (12) sont ménagées des rampes d'aération (13) constituant lesdites sources d'air, pour ainsi optimiser l'action des microorgansimes épurateurs stockés dans les cloisons.

6. Installation selon la revendication 5, ***caractérisée*** en ce que les rampes d'aération (13) ne sont mises en place que toutes les deux cloisons - support (12), afin de favoriser la création d'un mouvement de circulation des effluents autour desdites cloisons.

7. Installation selon l'une des revendications 5 et 6, ***caractérisée*** en ce qu'elle comporte au moins trois réacteurs différenciés (5, 6, 7) montés en série, chacun desdits réacteurs étant destiné à assurer une diminution de la Demande Chimique en Oxygène.

8. Installation selon l'une des revendications 5 à 7, ***caractérisée*** en ce qu'elle comprend en amont des réacteurs par rapport au sens de traitement des effluents un dispositif de flottation (4) des matières solides en suspension dans les effluents à traiter, monté entre le dégrilleur (2) et le premier des réacteurs (5, 6, 7).

9. Installation selon l'une des revendications 5 à 8, ***caractérisée*** en ce que les différents compartiments entrant dans sa réalisation son intégrés au sein d'une enveloppe cylindrique, respectivement :
• un dispositif de flottation central ;
• et une pluralité de compartiments radiaux, s'étendant entre le dispositif de flottation et l'enveloppe externe, et recevant une pluralité de bio-réacteurs et le séparateur (8), destiné à assurer la décantation du liquide résultant du traitement au niveau dudit réacteur, afin de séparer le liquide des boues.

10. Procédé pour assurer le traitement des effluents liquides chargés en matière organique, consistant tout d'abord à effectuer une décantation partielle des effluents à traiter, puis à réaliser une filtration, notamment des particules solides de plus grandes dimensions, et enfin, à leur faire subir un traitement de bio-réaction par la mise en oeuvre de microorganismes épuarteurs fixés, aptes à digérer les chaînes carbonées, et enfin à laisser séparer les produits issus de ce traitement, ***caractérisé*** en ce que pendant le traitement de bio-réaction, on impose aux effluents liquides à traiter, d'une part un cheminement alternativement ascendant et descendant en milieu aéré au contact de cloisons recevant les supports desdits microorganismes épurateurs, et d'autre part une circulation autour desdites cloisons, et en ce que l'on soumet lesdits effluents à au moins deux actions successives de bio-réaction, de telle sorte à réduire la demande chimique en oxygène d'au moins 90 % par rapport à la charge entrante.

11. Procédé pour assurer le traitement des effluents liquides chargés en matière organique selon la revendication 10, ***caractérisé*** en ce que préalablement au traitement de bio-réaction, on soumet les effluents à traiter à une flottation, afin d'écrêter la Demande Chimique en Oxygène, préalablement à l'action des microorganismes épurateurs.
